# EUROPEAN PATENT APPLICATION

(11) **EP 1 179 792 A1**
(43) Date of publication of application: **13.02.2002**
(21) Application number: 00116967.1
(22) Date of filing: 07.08.2000
(51) Int. Cl.: G06F 17/60

(54) **Event scheduling system and method**

(71) Applicant: PCYI Network Corporation, Taipei (TW)
(72) Inventor: Chen, Chih-min, Taipei (TW)
(74) Representative: TER MEER STEINMEISTER & PARTNER GbR

(57) **Abstract**

An event scheduling system (1) which comprises a memory module (11), an analysis module (12) and a scheduling module (13); wherein the memory system stores the data input by the user, the analysis procedure performs an analysis according to the data stored in the memory module (11) and the plurality of events input by the user so as to obtain at least one set of preferred event processing times, and the scheduling module (13) sorts the events according to the preferred event processing time and obtains at least one sorting result. The sorting result is provided to the user for his reference. The invention also discloses an event scheduling method.

## Description

### BACKGROUND OF THE INVENTION

### Field of Invention

The invention relates to an event scheduling system and the corresponding event scheduling method.

### Related Art

A schedule manager is a common tool for arranging event schedules. Any job to be done can be pre-recorded in the schedule manager, which can arrange the event schedule and notify the user.

Due to the popularity of computers, a lot of schedule managers with a large number of special functions are available for computers and even through the Internet. Along with the development of computers and the Internet, the schedule manager is used not only for notifying the user of work to be done, but also for arranging event schedules. For example, the event scheduling system can notify the user regarding an upcoming project or event. The user does not need to check the schedule by himself. Further, the event scheduling system can be combined with an address book to actively remind the user of birthdays. The user does not need to input the relevant information.

Nevertheless, there is no event scheduling system and method that can actively suggest to the user how his schedule should be arranged. If, aside from simply recording things to be done, the event scheduling system can actively suggest a set of preferred time schedules, more users will be willing to make use of this system.

Thus, it is desirable to provide an event scheduling system and method that can actively suggest to the user a preferred time schedule.

### SUMMARY OF THE INVENTION

In view of the foregoing, it is then an object of the invention to provide an event scheduling system and method that can perform analyses and sorting on a plurality of events entered by the user and provide the user its sorted results for his reference.

To achieve the above objective, the invention provides an event scheduling system, which comprises a memory module, an analysis module and a scheduling module; wherein the memory system stores the data entered by the user, the analysis module performs an analysis according to the data stored in the memory module and the plurality of events entered by the user so as to obtain at least one set of preferred event processing times, and the scheduling module sorts the events according to the preferred event processing times and obtains at least one sorting result, which is presented to the user for his reference.

The invention also provides an event scheduling method, which comprises a memory procedure, an analysis procedure and a scheduling procedure; wherein the memory procedure stores the data entered by the user, the analysis procedure performs an analysis according to the plurality of events entered by the user so as to obtain at least one set of preferred event processing times, and the scheduling module sorts the events according to the preferred event processing times and obtains at least one sorting result, which is presented to the user for his reference.

Other features and advantages of the invention will be apparent from the following detailed description, which proceeds with reference to the accompanying drawings.

### BRIEF DESCRIPTION OF THE DRAWINGS

FIG. 1 is a schematic view showing a structure of the event scheduling system according to a preferred embodiment of the invention;
FIG. 2 is a schematic view showing an example of the relation among an initial position, a target position and a relative position;
FIG. 3 is a schematic view showing one sorting result according to the preferred event processing times obtained under the circumstances shown in FIG. 2;
FIG. 4 is a schematic view showing another example of the relation among an initial position, a target position and a relative position and the preferred event processing times for all types of positions;
FIG. 5(A) is a schematic view showing one sorting result for the conditions shown in FIG. 4;
FIG. 5(B) is a schematic view showing another sorting result for the conditions shown in FIG. 4;
FIG. 6 is a flow chart of the event scheduling method according to a preferred embodiment of the invention; and
FIG. 7 is a schematic view showing another example that operates according to the event scheduling system and method in a preferred embodiment of the invention.

In the various drawings, the same references relate to the same elements.

### DETAILED DESCRIPTION OF THE INVENTION

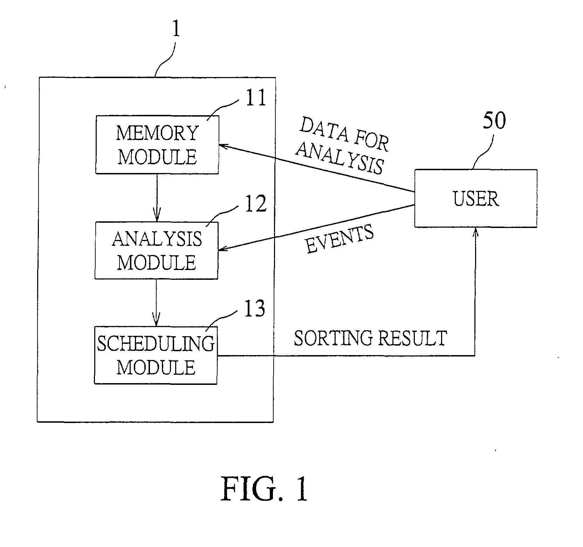

Referring to FIG. 1, the event scheduling system 1 according to a preferred embodiment of the invention comprises a memory module 11, an analysis module 12. and a scheduling module 13. The memory module stores the data a user 50 enters and provides the data needed for the analysis performed by the analysis module 12. The content of the data depends upon the type of analysis performed by the analysis module 12. For example, if the analysis module 12 performs the analysis of auspicious direction, that is, analyzing which direction would be beneficial at a certain time, the memory module 11 has to store at least the data for such analysis.

The memory module can be a long-term data storage device such as a hard disk drive or a writeable optical disk drive or random access memory (RAM) that will lose stored data once the system is shut off. If RAM is chosen to implement the memory module 11 of the invention, then the user 50 has to enter all relevant data again each time he logs onto the event scheduling system 1, which is rather inconvenient. Therefore, even though such devices that will lose information after the system shuts down are not against the spirit of the invention, the inventor still recommends a long-term data storage device to be used in the memory module 11.

The analysis module 12 performs analyses according to a plurality of events entered by the user 50 so as to obtain a preferred event processing time for all events. For instance, after the user 50 enters the initial position from which he starts to visit his clients (such as the location of his office) and a plurality of destinations (such as the clients' locations), the analysis module 12 then performs an analysis of auspicious directions by considering the directions of the destinations relative to the initial position of the user 50. Once such an analysis is done, the module 12 then obtains the time that each particular client is in the auspicious direction relative to the initial position. This time is the preferred visiting time for that client. That is, when the coming event is to visit a client, the preferred event processing time is the preferred visiting time for that client.

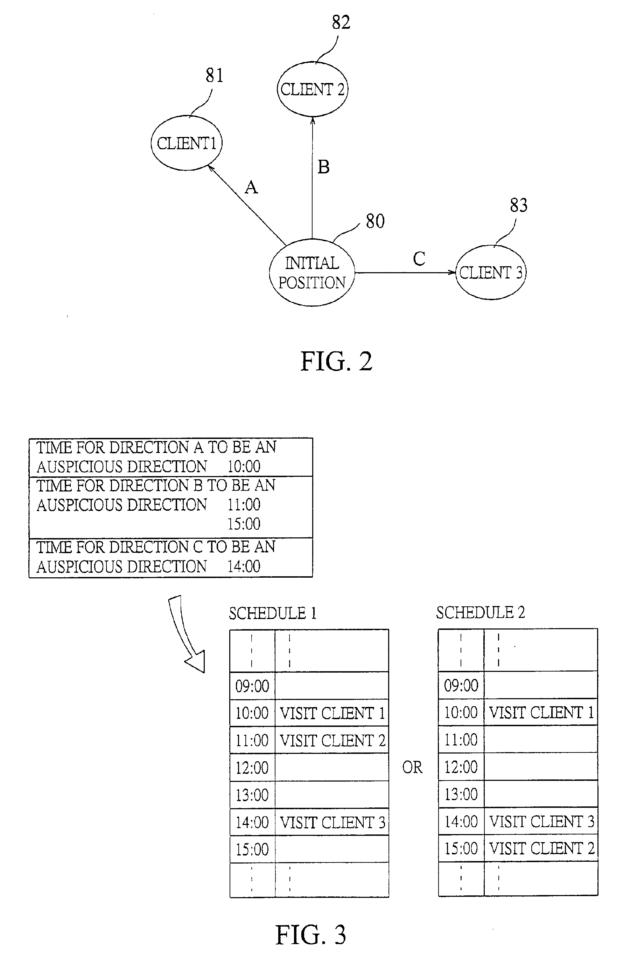

Referring to FIG. 2, if the user 50 starts from the initial position 80 and wants to visit the first client 81, the second client 82 and the third client 83 located at three different destination positions respectively, the analysis module 12 can analyze when the directions A, B and C of the first client 81, the second client 82 and the third client 83 relative to the initial position 80 respectively, would become an auspicious direction for the user according to the user's birthday and other relevant data. The method for obtaining the auspicious direction has been an important research subject for fortune analysts and there exists a lot of different methods based upon various data inputs.

One must notice that the user 50 can set up the data for a plurality of events in the memory module 11. When performing an analysis, the system can retrieve relevant data directly from the memory module 11. This can avoid the trivial data entry procedure. For instance, the user 50 can enter data of all his clients, including names and addresses, into the memory module 11 beforehand, and establish an indexed address book. Therefore, when the user enters the clients he wants to visit, he only needs to pick them from the established address book. The analysis module 12 can then obtain the corresponding client data from the memory module 11.

Once the preferred event processing time of the plurality of events is obtained, the scheduling module 13 then sorts the preferred event processing time to obtain at least one sorting result. With reference to FIG. 3, after the system obtains the preferred visiting time of the first client 81, the second client 82 and the client 3 83 described in FIG. 2, the scheduling module 13 then sort the time to determine the schedule of visiting the clients. Since two preferred visiting times are found for the second client 82, two different visiting schedules are obtained, namely the schedule 1 and schedule 2 shown in FIG. 3. The user 50 can determine which schedule is suitable for him.

The analysis module 12 and the scheduling module 13 can adopt devices such as an application-specific integrated circuit (ASIC) that have analysis and sorting algorithms built into the hardware. They can also use a reduced instruction set computing (RISC) processor or a complex instruction set computing (CISC) processor, equipped with memory devices that stores all necessary program codes.

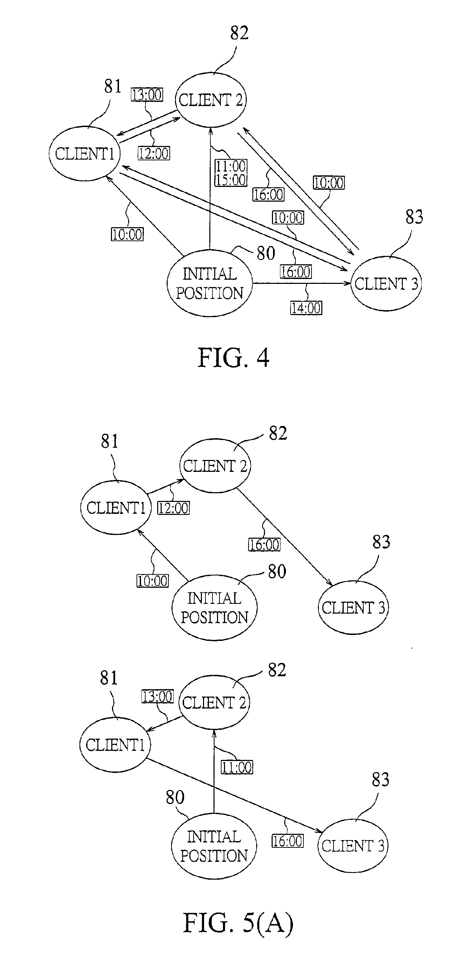

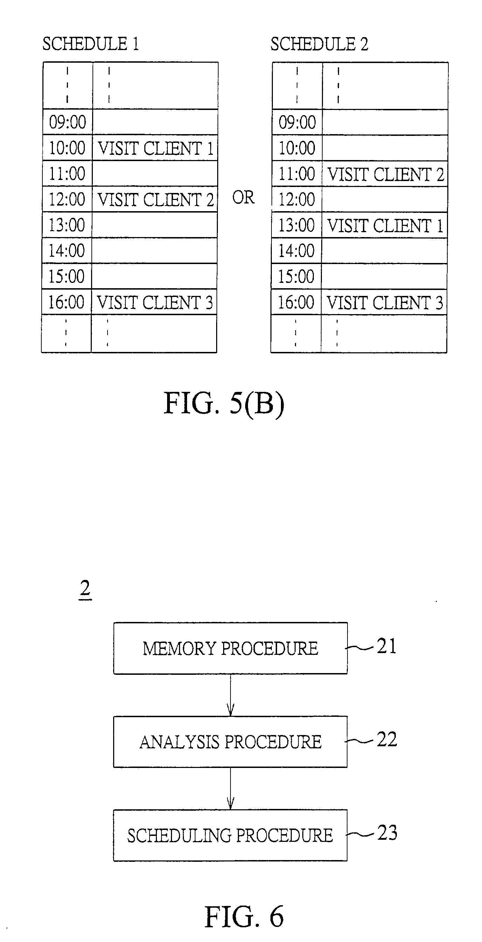

Referring to FIG. 4, the analysis module 12 can perform an analysis of auspicious directions according to the directions of the first client 81, the second client 82 and the third client 83 relative to the initial position 80 and the relative directions of those three clients. In the drawing, the time shown beside each orientation is the time when the orientation becomes an auspicious one. Once the time for each auspicious direction is obtained, the scheduling module 13 can perform an analysis on all possible cases and generate a feasible client-visiting schedule. FIG. 5(A) shows such a feasible visiting order and FIG. 5(B) shows the corresponding visiting schedule.

It is noted that the difference between the schedule shown in FIG. 5(B) and the one shown in FIG. 3 is that the user 50 always starts from the initial position 80 in the FIG. 3 schedule , while according to the schedule FIG. 5(B) the user 50 goes to the next client from the previous client except for the first client which he starts from the initial position 80. The user can determine which way he prefers according to his needs.

With reference to FIG. 6, the event scheduling method 2 according to a preferred embodiment of the invention comprises a memory procedure 21, an analysis procedure 22 and a scheduling procedure 23. The memory procedure 21 stores data entered by the user, the analysis procedure 22 performs analyses according to the plurality of events entered by the user so as to obtain at least one set of preferred event processing times, and the scheduling module 23 sorts the events according to the preferred event processing time and obtains at least one sorting result, which is presented to the user for his reference.

In the memory procedure 21, the data entered by the user is for the analysis performed in the analysis procedure 22. After the user inputs the data, the memory procedure 21 can store the data in a long-term data storage device, such as a hard disk drive or a recordable optical disk drive. Thus, when the user wants to run the event scheduling method 2 again, the same data do not need to be entered repeatedly. This greatly increases the convenience for the user using the event scheduling method 2.

The analysis procedure 22 performs analyses according to the plurality of events entered by the user and obtains at least one preferred event processing time for each event. As described hereinbefore, the events can be the initial position of the user and a plurality of destinations that he wants to visit. The preferred times are the times for the plurality of destinations to be in auspicious directions relative to the initial position. The analysis procedure 22 performs an analysis of auspicious directions for the plurality of destinations so as to obtain a set of preferred visiting times. The scheduling procedure 23 then sorts the set of preferred event processing times thus obtained to obtain at least one sorting result. For instance, it can sort the preferred visiting times of all destinations to obtain at least one preferred visiting schedule.

The detailed description of the memory procedure 21, the analysis procedure 22 and the scheduling procedure 23 is similar to the above-described event scheduling system 1 and is not repeated here. However, it should be noted that those skilled in the art could readily write the event scheduling method of the invention into computer programs and store the programs in a recording medium. Therefore, the recording medium can be accessed using a normal computer or a server so as to execute the disclosed event scheduling method.

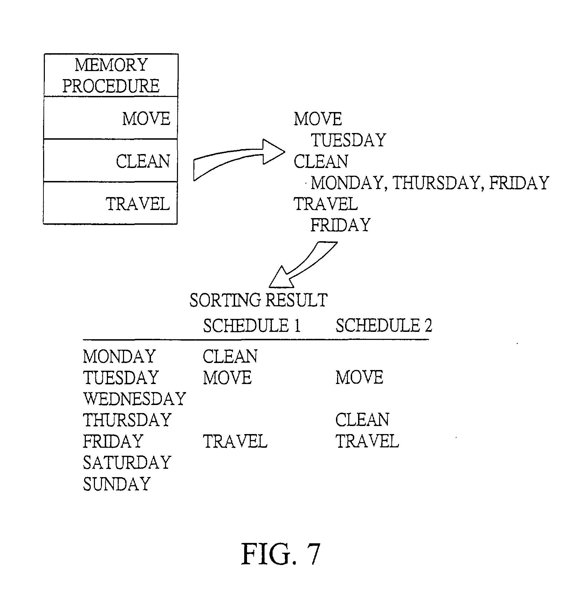

Furthermore, a skilled person can easily perform equivalent modifications or changes to the invention without departing from its spirit or scope. For example, the events can be work to be done and the preferred event processing time is the auspicious time for processing those jobs. Referring to FIG. 7, if the events entered by the user are a plurality of jobs to be done, such as moving, cleaning and traveling shown in the drawing, the analysis procedure 22 can calculate the preferred times for the user to move, clean and travel during the current week based upon the data stored in the memory procedure 21. Such data can be a Chinese lunar calendar. The scheduling procedure 23 then sorts out a preferred order from the preferred times. According to the situation described in FIG. 7, the scheduling procedure 23 sorts out two different schedules. The user can input extra conditions to further constrain the sorting procedure. For instance, the user can add in a "moving before cleaning" condition so that only schedule 2 is allowed.

Aside from simply recording jobs to be done, the event scheduling system and method disclosed herein can actively provide suggestions for preferred event processing times. Therefore, this invention can save the user time in arranging the schedule on his own. For the business that provides event-scheduling systems, more users will be attracted to the business and willing to use the system and method.

It is appreciated that various modifications to the invention concepts described herein may be apparent to those skilled in the art without departing from the spirit and the scope of the invention defined by the hereinafter appended claims.

## Claims

1. An event scheduling system for receiving a plurality of events entered by a user and sorting the plurality of events, which comprises:
a memory module, which stores data entered by the user;
an analysis module, which performs an analysis on the plurality of events using the data stored in the memory module so as to obtain at least one preferred processing time for each event; and
a scheduling module, which sorts the plurality of events according to their respective preferred processing times to obtain at least one sorting result for the user's reference.

2. The event scheduling system of claim 1, wherein
the plurality of events comprises an initial position for the user and a plurality of destinations that the user wants to visit;
the analysis that the analysis module performs on the plurality of destinations is regarding auspicious directions;
the preferred processing time is the time when the relative position of a particular destination to the initial position becomes an auspicious direction; and
the sorting result is the order in which the user visits the plurality of destinations.

3. The event scheduling system of claim 1, wherein
the plurality of events comprises a plurality of destinations that the user wants to visit;
the analysis that the analysis module performs on the plurality of destinations is regarding auspicious directions;
the preferred processing time is the time when the relative position of a particular destination to another becomes an auspicious direction; and
the sorting result is the order in which the user visits the plurality of destinations.

4. The event scheduling system of claim 1, wherein
the plurality of events comprises jobs that the user wants to do;
the analysis that the analysis module performs on the jobs is regarding the auspicious time to do the jobs;
the preferred processing time is the auspicious time to do the jobs; and
the sorting result is the order in which the user does the jobs.

5. The event scheduling system of claim 1, wherein the memory module comprises a hard disk drive.

6. The event scheduling system of claim 1, wherein the memory module comprises a recordable optical disk drive.

7. The event scheduling system of claim 1, wherein the analysis module comprises a fortune analysis module.

8. The event scheduling system of claim 1, wherein the analysis module comprises an application specific integrated circuit (ASIC).

9. The event scheduling system of claim 1, wherein the analysis module comprises a complex instruction set computing (CISC) processor.

10. The event scheduling system of claim 1, wherein the analysis module comprises a reduced instruction set computing (RISC) processor.

11. The event scheduling system of claim 1, wherein the scheduling module comprises an application specific integrated circuit (ASIC).

12. The event scheduling system of claim 1, wherein the scheduling module comprises a complex instruction set computing (CISC) processor.

13. The event scheduling system of claim 1, wherein the scheduling module comprises a reduced instruction set computing (RISC) processor.

14. An event scheduling method for receiving a plurality of events entered by a user and sorting the plurality of events, which comprises:
a memory procedure for storing data entered by the user;
an analysis module for performing an analysis on the plurality of events using the data stored in the memory procedure so as to obtain at least one preferred processing time for each event; and
a scheduling procedure for sorting the plurality events according to their respective preferred processing times to obtain at least one sorting result for the user's reference.

15. The event scheduling method of claim 14, wherein
the plurality of events comprises an initial position for the user and a plurality of destinations that the user wants to go to;
the analysis that the analysis procedure performs on the plurality of destinations is regarding auspicious directions;
the preferred processing time is the time when the relative position of a particular destination to the initial position becomes an auspicious direction; and
the sorting result is the order in which the user visits the plurality of destinations.

16. The event scheduling method of claim 14, wherein
the plurality of events comprises a plurality of destinations that the user wants to go to;
the analysis that the analysis procedure performs on the plurality of destinations is regarding auspicious directions;
the preferred processing time is the time when the relative position of a particular destination to another becomes an auspicious direction; and
the sorting result is the order that the user visits the plurality of destinations.

17. The event scheduling method of claim 14, wherein
the plurality of events comprises jobs that the user wants to do;
the analysis that the analysis procedure performs on the jobs is regarding the auspicious time to do the jobs;
the preferred processing time is the auspicious time to do the job; and
the sorting result is the order in which the user does the jobs.

18. A computer accessible recording medium, which stores:
a memory procedure for storing data and a plurality of events entered by a user;
an analysis procedure for performing analyses according to the data and the events so as to obtain at least one preferred processing time for each of the events; and
a scheduling procedure for sorting the events according to the preferred processing times to obtain at least one sorting result for the user's reference.

19. The recording medium of claim 18, wherein
the plurality of events comprises an initial position of the user and a plurality of destinations that the user wants to go to;
the analysis that the analysis procedure performs on the plurality of destinations is regarding auspicious directions;
the preferred processing time is the time when the relative position of a particular destination to the initial position becomes an auspicious direction; and
the sorting result is the order that the user visits the plurality of destinations.

20. The recording medium of claim 18, wherein
the plurality of events comprises a plurality of destinations that the user wants to go to;
the analysis that the analysis procedure performs on the plurality of destinations is regarding auspicious directions;
the preferred processing time is the time when the relative position of a particular destination to another becomes an auspicious direction; and
the sorting result is the order that the user visits the plurality of destinations.

21. The recording medium of claim 18, wherein
the plurality of events comprises jobs that the user wants to do;
the analysis that the analysis procedure performs on the jobs is regarding auspicious time to do the jobs;
the preferred processing time is the auspicious time to do the job; and
the sorting result is the order in which the user does the jobs.
